# EUROPÄISCHE PATENTANMELDUNG

(11) **EP 4 834 469 A1**
(43) Veröffentlichungstag der Anmeldung: **04.11.2026**
(21) Anmeldenummer: 25184042.7
(22) Anmeldetag: 19.06.2025
(51) Int. Cl.: B01J 19/24

(54) **HEIZER-REFORMER-ANORDNUNG**

(30) Priorität: 29.04.2025 EP 25173328
(71) Anmelder: Sunfire SE, 01237 Dresden (DE)
(72) Erfinder: Bachmann, John, 01277 Dresden (DE); Surrey, Alexander, 01219 Dresden (DE); Blumentritt, Robert, 01159 Dresden (DE)
(74) Vertreter: Hauck Patent- und Rechtsanwälte PartmbB

(57) **Zusammenfassung**

Heizer-Reformer-Anordnung zur Umwandlung eines kohlenwasserstoffreichen Eduktgases (E) in ein wasserstoffreiches Produktgas (P) und/oder zum elektrischen Beheizen eines Eduktgases, umfassend wenigstens ein Gehäuse mit einem Innenraum, und wenigstens einer im Innenraum des Gehäuses angeordneten Stackanordnung, wobei die Stackanordnung mehrere in eine Stapelrichtung (S) gestapelte plattenartig ausgeführte, jeweils eine Beschichtung aufweisende Heizer-Reformer-Zellen umfasst, wobei zwischen benachbart angeordneten Heizer-Reformer-Zellen jeweils ein Abstandshalteelement angeordnet ist, und wobei die Stackanordnung für den Durchgang eines Gases durch die Stackanordnung ausgebildet und eingerichtet ist, derart dass ein an die Stackanordnung geführtes Eduktgas (E) zwischen den Heizer-Reformer-Zellen geführt ist und dabei die mit der Beschichtung versehenen Oberflächenbereiche der Heizer-Reformer-Zellen überstreicht, dadurch gekennzeichnet, dass zumindest einige Heizer-Reformer-Zellen jeweils elektrisch leitend mit den an die Heizer-Reformer-Zellen angrenzenden Abstandshalteelemente kontaktiert sind, derart, dass ein Stromfluss zwischen einer in Stapelrichtung (S) ersten elektrisch leitend mit einem ersten Pol einer elektrischen Versorgungseinrichtung verbundenen Heizer-Reformer-Zelle und einer in Stapelrichtung (S) letzten elektrisch leitend mit einem zweiten Pol einer elektrischen Versorgungseinrichtung verbundenen Heizer-Reformer-Zelle ermöglicht ist.

## Beschreibung

Die Erfindung betrifft eine Heizer-Reformer-Anordnung zur Umwandlung eines kohlenwasserstoffreichen Eduktgases in ein wasserstoffreiches Produktgas und/oder zum elektrischen Beheizen eines Eduktgases gemäß dem Oberbegriff des Anspruchs 1.

Heizer-Reformer-Anordnungen der gattungsgemäßen Art dienen der Erzeugung eines wasserstoffreichen Produktgases durch katalytische Umwandlung eines kohlenwasserstoffhaltigen Eduktgases und/oder der elektrischen Erwärmung eines Eduktgases. Solche Heizer-Reformer-Anordnungen umfassen eine Mehrzahl von Heizer-Reformer-Zellen, die stapelartig in einem Stack angeordnet sind und voneinander beabstandet gehalten werden. Die Oberflächen der Reformerzellen sind mit einer Beschichtung versehen. Mittels dieser Beschichtung kann das Eduktgas katalytisch umgewandelt und/oder erhitzt werden. Die Schichtdicke und der spezifische elektrische Widerstand sind so gewählt, dass die Einkopplung von Wärme für die katalytische Umwandlung und/oder elektrische Erwärmung des Eduktgases im Wesentlichen über die Beschichtung erfolgt. Diese Reaktionsflächen werden von dem zugeführten Eduktgas angeströmt, wodurch die chemische Umwandlung - z. B. von Methan und Wasserdampf zu Wasserstoff und Kohlenmonoxid - auf der aktiven Katalysatorschicht initiiert und unterstützt bzw. das Eduktgas durch Konvektion erwärmt wird. Bei der Umwandlung bzw. der Erwärmung von kohlenwasserstoffhaltigen Gasen kann es zur Rußbildung kommen. Die Rußbildung wird unter anderem von der Prozesstemperatur und der Länge der Kohlenwasserstoffverbindungen beeinflusst. Kohlenstoffablagerung auf der katalytisch wirksamen Beschichtung können die Oberfläche blockieren, Poren verstopfen und letztlich den Katalysator deaktivieren (sog. "Coking"). Coking stellt ebenso ein Problem für Heizer-Anwendungen dar, da Ablagerungen zum einen den durch den Heizer geführten Volumenstrom als die Wärmeübertragung reduzieren können, was sich auf nachfolgende Prozessschritte, wie z.B. einer elektrolytischen Umsetzung der Eduktgases in einer Hochtemperatur-Elektrolyse auswirken kann, bei welcher hohe Anforderungen an die Temperatur des Eduktgases bestehen.

Ein Problem herkömmlicher Reformer-Anordnungen oder Heizer-Anordnungen besteht darin, dass diese gar nicht oder nur unter erhöhtem Aufwand zu warten sind. Lassen sich die einzelnen Komponenten nicht ohne Aufwand oder Beschädigung voneinander trennen und regenerieren, ist das sowohl bezüglich der Betriebskosten als auch aus Sicht der Nachhaltigkeit nachteilig, da Reformer oder Heizer ersetzt werden müssen und sich verbrauchte Anordnungen schlecht oder gar nicht recyclen lassen bzw. nur ein Downcycling möglich ist.

Der Erfindung liegt die Aufgabe zugrunde, eine Heizer-Reformer-Anordnung bereitzustellen, welche sich auf einfache Weise zerlegen und regenerieren lässt.

Die Aufgabe wird gelöst durch eine Heizer-Reformer-Anordnung mit den Merkmalen des Anspruchs 1. Vorteilhafte Ausgestaltungen sind in den Unteransprüchen angegeben.

Erfindungsgemäß ist eine Heizer-Reformer-Anordnung zur Umwandlung eines kohlenwasserstoffreichen Eduktgases in ein wasserstoffreiches Produktgas und/oder zum elektrischen Beheizen eines Eduktgases, umfassend wenigstens ein Gehäuse mit einem Innenraum, und wenigstens einer im Innenraum des Gehäuses angeordneten Stackanordnung, wobei die Stackanordnung mehrere in eine Stapelrichtung gestapelte plattenartig ausgeführte, jeweils eine Beschichtung aufweisende Heizer-Reformer-Zellen umfasst, wobei zwischen benachbart angeordneten Heizer-Reformer-Zellen jeweils ein Abstandshalteelement angeordnet ist, und wobei die Stackanordnung für den Durchgang eines Gases durch die Stackanordnung ausgebildet und eingerichtet ist, derart dass ein an die Stackanordnung geführtes Eduktgas zwischen den Heizer-Reformer-Zellen geführt ist und dabei die mit der Beschichtung versehenen Oberflächenbereiche der Heizer-Reformer-Zellen überstreicht, wobei zumindest einige Reformerzellen jeweils elektrisch leitend mit den an die Reformerzellen angrenzenden Abstandshalteelementen kontaktiert sind, derart, dass ein Stromfluss zwischen einer in Stapelrichtung ersten elektrisch leitend mit einem ersten Pol einer elektrischen Versorgungseinrichtung verbundenen Reformerzelle und einer in Stapelrichtung letzten elektrisch leitend mit einem zweiten Pol einer elektrischen Versorgungseinrichtung verbundenen Reformerzelle ermöglicht ist.

Die plattenartig ausgeführten Heizer-Reformer-Zellen sind erfindungsgemäß in einer Stackanordnung gestapelt. Die Plattenebene der Zellen erstreckt sich dabei senkrecht zur Stapelrichtung. Auf der Oberseite und/oder auf der Unterseite der plattenartigen Heizer-Reformer-Zellen ist die Beschichtung aufgebracht. Mittels der Beschichtung kann das kohlenwasserstoffreichen Eduktgas katalytisch umgewandelt und/oder elektrisch beheizt werden.

Um eine elektrische Aufwärmung der Stackanordnung zu ermöglichen, ist erfindungsgemäß vorgesehen, dass zumindest einige Heizer-Reformer-Zellen jeweils elektrisch leitend mit den an die Heizer-Reformer-Zellen angrenzenden Abstandshalteelementen kontaktiert sind, derart, dass ein Stromfluss zwischen einer in Stapelrichtung ersten elektrisch leitend mit einem ersten Pol einer elektrischen Versorgungseinrichtung verbundenen Heizer-Reformer-Zelle und einer in Stapelrichtung letzten elektrisch leitend mit einem zweiten Pol einer elektrischen Versorgungseinrichtung verbundenen Heizer-Reformer-Zelle ermöglicht ist. Der Stromfluss erfolgt dabei durch die Fläche der einzelnen aufeinandergestapelten Heizer-Reformer-Zelleinheiten, bestehend jeweils aus einer Heizer-Reformer-Zelle und einem die Heizer-Reformer-Zelle elektrisch kontaktierenden Abstandshalter. Der Gasdurchfluss erfolgt dabei längs der Reformer-Zelleinheiten durch Öffnungen in dem Abstandshalter, zum Beispiel einem porösen Schichtelement, das einerseits die Beschichtung auf der Oberseite einer in Stapelrichtung ersten Heizer-Reformer-Zelle kontaktierend und andererseits die Beschichtung auf der Unterseite einer in Stapelrichtung folgenden zweiten Heizer-Reformer-Zelle kontaktierend zwischen diesen beiden Heizer-Reformer-Zellen angeordnet ist. Die für die elektrische Beheizung der erfindungsgemäßen Heizer-Reformer-Anordnung eingesetzte elektrische Energie wird dabei zum Beispiel unter Beaufschlagung der Stackanordnung mit einer Spannung zwischen 200 V und 800 V, vorzugsweise 230 V, 400 V bzw. 690 V Wechselspannung, und einer Stromstärke von bis zu 200 A eingekoppelt. Als elektrischen Versorgungseinrichtung kann sowohl eine Gleich- als auch eine Wechselspannungsquelle verwendet werden.

In einer bevorzugten Ausgestaltung können die Reformerzellen und die Abstandshalteelemente lose und zerstörungsfrei trennbar aufeinandergestapelt sein. Diese Anordnung ist also insbesondere unter Verzicht von stoffschlüssigen Verbindungen wie Verkleben, Verlöten, Sinterfügen oder Verschweißen ausgeführt.

Die Beheizung der erfindungsmäßen Heizer-Reformer-Anordnung erfolgt elektrisch, um eine kompakte und präzise regelbare Temperaturführung zu ermöglichen. Denkbar ist, dass die thermische Energie der durch die erfindungsgemäße Heizer-Reformer-Anordnung geführten Edukt- und Produktgase ausschließlich elektrisch mittels eines die Stackanordnung aufwärmenden Stromflusses zwischen einer in Stapelrichtung ersten Reformerzelle und einer in Stapelrichtung letzten Reformerzelle eingebracht wird. Dabei kann ein Gas auf einem ersten Temperaturniveau (zum Beispiel Raumtemperatur) in die Heizer-Reformer-Anordnung eingeleitet und auf einem zweiten Temperaturniveau ausgeleitet werden. Zusätzlich ist auch eine Vorwärmung der in die Heizer-Reformer-Anordnung eingeleiteten Gase bis auf Prozesstemperatur denkbar. Der erfindungsgemäßen Heizer-Reformer-Anordnung kann eine zusätzliche elektrische Heizvorrichtung und/oder eine Rekuperator/Heizer-Anordnung vorgeschaltet sein, um einen ersten Temperaturhub durch die Rekuperator/Heizer-Anordnung und einen zweiten Temperaturhub durch die Heizer-Reformer-Anordnung zu erreichen.

Vorzugsweise wird die erfindungsgemäße Heizer-Reformer-Anordnung isotherm betrieben. Das heißt, die Betriebstemperatur der Anordnung wird auf einem im Wesentlichen gleichbleibenden Temperaturniveau gehalten werden, um eine effiziente Umsetzung zu unterstützen und eine Schädigung der Heizer-Reformer-Zellen und insbesondere der Beschichtung der Heizer-Reformer-Zellen zu vermeiden.

Für die Umsetzung von kurzkettigen Kohlenwasserstoffen / eines entsprechenden Gemischs für eine Co-Elektrolyse von CO₂ und H₂O beispielsweise, sollte die Prozesstemperatur zwischen 800 und 900 °C eingestellt werden.

Für eine vorteilhafte Stromversorgung können die miteinander elektrisch leitend verbundenen Komponenten in der Stackanordnung derart ausgeführt sein, dass die Stackanordnung zwischen dem ersten elektrisch leitend mit dem ersten Pol der elektrischen Versorgungseinrichtung verbundenen Reformerzelle und dem letzten elektrisch leitend mit dem zweiten Pol der elektrischen Versorgungseinrichtung verbundenen Reformerzelle einen elektrischen Gesamtwiderstand im Bereich 1 Ohm bis 100 Ohm, vorzugsweise im Bereich 5 Ohm bis 20 Ohm ausweist. Bei einer Beaufschlagung der Stackanordnung mit einer Spannung von 400 V hat sich ein Gesamtwiderstand von 8 Ohm als besonders vorteilhaft herausgestellt. Bei einer Beaufschlagung mit einer Spannung von 690 V hat sich ein Gesamtwiderstand von 14 Ohm als besonders vorteilhaft herausgestellt.

In einer bevorzugten Ausgestaltung ist daran gedacht, dass die Beschichtung derart ausgebildet und eingerichtet ist, dass sie einen spezifischen elektrischen Widerstand im Bereich von 1 · ${10}^{6} \frac{Ohm ⋅ {mm}^{2}}{m}$ bis $1 ⋅ {10}^{8} \frac{Ohm ⋅ {mm}^{2}}{m}$ aufweist. Als besonders vorteilhaft hat sich herausgestellt, wenn die Beschichtung im heißen Zustand einen spezifischen elektrischen Widerstand von etwa $3 ⋅ {10}^{7} \frac{Ohm ⋅ {mm}^{2}}{m}$ aufweist. Der spezifische elektrische Widerstand lässt sich zum Beispiel durch Veränderung der Zusammensetzung der Beschichtung und im speziellen des Metallgehalts beeinflussen.

Vorzugsweise sind die Abstandshalteelemente elektrisch leitend oder sie haben elektrisch leitende Strukturen, sodass ein Stromfluss zwischen zwei benachbarten Heizer-Reformer-Zellen über den zwischen diesen Heizer-Reformer-Zellen angeordneten Abstandshalteelemente stattfinden kann. Sind mehrere aufeinanderfolgende Heizer-Reformer-Zellen mit derartigen Abstandshalteelementen beabstandet, kann ein Stromfluss von einer ersten Heizer-Reformer-Zelle dieser Anordnung bis zu einer zweiten Heizer-Reformer-Zelle dieser Anordnung und aller dazwischen angeordneten Heizer-Reformer-Zellen stattfinden. Die elektrische Kontaktierung der lose aufeinander gestapelten Heizer-Reformer-Zellen und Abstandshalteelementen kann mittels einer Verspannung der Stackanordnung in Stapelrichtung verbessert werden. Damit liegen die einzelnen Elemente eng aneinander und ermöglichen damit eine stromleitende Verbindung. Mittels einer äußeren auf die Stackanordnung wirkenden Verspannkraft, die auch im heißen Zustand möglichst in gleicher Kraftwirkung aufrechterhalten wird, kann eine homogene Kontaktierung der Heizer-Reformer-Zellen bzw. der aus einer Heizer-Reformer-Zelle und einem zum Beispiel flächig darauf angeordneten Abstandshalter (zum Beispiel einem Metallschaum-Schichtelement) aufgebauten Heizer-Reformer-Zelleinheiten bereitgestellt werden

Die Langlebigkeit, Effizienz und Sicherheit der Heizer-Reformer-Anordnung kann dadurch erhöht werden, dass die Heizer-Reformer-Zellen aus hitzebeständigem Chrom-Stahl ausgebildet sind. Die Verwendung von hitzebeständigem Chrom-Stahl sorgt für eine hohe Temperaturbeständigkeit der Anordnung auch bei Temperaturen von zum Beispiel 600 bis 900 °C, bei denen Reformerprozesse ablaufen und macht diese geeignet für eine Anwendung als Hochtemperatur-Heizer, der Eduktgas für einen Hochtemperatur-Elektrolyseprozess mit Temperaturen von 800°C bis 900°C bereitstellen kann. Besonders bevorzugt sind Eisen-Chrom-Aluminium-Legierungen wie beispielsweise 1.4767, insbesondere, da dieser Stahl an seiner Oberfläche eine Aluminiumoxidschicht ausbildet, die den Stahl gut beschichtbar macht. Schließlich haben die genannten Materialien gute mechanische Eigenschaften bei hohen Temperaturen. Dazu zählen eine hohe Kriechfestigkeit und eine hohe Formstabilität. Bevorzugt sind die einzelnen Heizer-Reformer-Zellen als Bleche mit einer Blechstärke im Bereich zwischen etwa 0,35 mm bis 5 mm ausgeformt. Die Bleche sind haben Kantenlängen von 50 mm bis 500 mm. Sie können rechteckig oder quadratisch sein. Die Dimensionen der Heizer-Reformer-Anordnung werden entsprechend des gewünschten Volumenstroms des Eduktgases und den Anforderungen die Temperatur für die katalytische Umsetzung bzw. den gewünschten Temperaturhub gewählt.

Je nach Anwendung als Katalysator und/oder Heizer lassen sich die katalytische Wirkung der Beschichtung, der spezifische elektrische Widerstand und die Schichtdicke der Beschichtung einstellen. Material und Schichtdicke beeinflussen den Gesamtwiderstand der Stackanordnung, welcher in einer sinnvollen Größenordnung liegen muss, damit man diesen mit einer kostengünstigen elektrischen Versorgungseinrichtung, d.h. beispielsweise mit einer 230/400/690 Volt Spannungsquelle versorgen kann.

Bevorzugt weist die Heizer-Reformer-Anordnung einen Gesamtwiderstand von 1 Ohm bis 100 Ohm, besonders bevorzugt 1 Ohm bis 20 Ohm auf. Bevorzugt weist die Beschichtung eine mittlere Schickdicke zwischen 15 µm und 300 µm, besonders bevorzugt zwischen 20 µm und 50 µm auf. Weiter bevorzugt weist die Beschichtung einen spezifischen elektrischen Widerstand zwischen ungefähr $1 ⋅ {10}^{7} \frac{Ohm ⋅ {mm}^{2}}{m}$ und $1 ⋅ {10}^{8} \frac{Ohm ⋅ {mm}^{2}}{m}$ in einem Temperaturbereich von 600°C bis 800°C auf.

Für die Ausgestaltung der Refromer-Heizer-Anordnung als Katalysator bzw. Reformer ist daran gedacht, dass die Beschichtung eine katalytisch wirksame Beschichtung ist, mittels der ein kohlenwasserstoffreiches Eduktgas in ein wasserstoffreiches Produktgas umwandelbar ist. Bei der Auslegung als Reformer wird die Beschichtung auf der Basis ihrer katalytischen Eigenschaften ausgewählt. Für eine hohe katalytische Effizienz der Heizer-Reformer-Anordnung ist daran gedacht, dass die katalytisch wirksame Beschichtung zumindest einiger Heizer-Reformer-Zellen aus einer Nickel-Schicht und/oder einem anderen Übergangsmetall wie zum Beispiel Cobalt (Co), Kupfer (Cu). Platin (Pt), Rhodium (Rh), Palladium (Pd), Ruthenium (Ru), Iridium (Ir), Eisen (Fe) oder einem Gemisch aus Übergangsmetallen ausgebildet ist. Die Verwendung von Nickel ist kostengünstiger, auch wenn der Massenanteil mit 7% bis 25% deutlich höher ist, als bei der Verwendung eines Übergangsmetalls. Hier empfehlen sich Massenanteile von < 1,5%.

Die katalytisch wirksame Beschichtung kann z.B. in Form von feinen Nanopartikeln auf einer porösen, temperaturstabilen Trägerschicht aus z.B. Ceroxid, Zirkonoxid oder Aluminiumoxid vorliegen, welche eine große spezifische Oberfläche bereitstellen und gut auf Trägermaterialien haften. Insbesondere Kompositmaterialien wie Nickel-Ceroxid oder Nickel-Zirkonoxid sind für die Beschichtung der Heizer-Reformer-Zellen geeignet, da sich ihr spezifischer Widerstand und die katalytische Wirkung über die Porosität, die Mikrostruktur, den Volumenanteil von Nickel und die Dotierung des oxidischen Materials beeinflussen lassen.

Es ist zudem möglich, eine Beschichtung aus einem Schichtsystem, welches mehrere Schichten umfasst, einzusetzen. Dabei kann eine erste Beschichtung so gewählt werden, dass mittels dieser ersten Beschichtung Wärme in die Heizer-Reformer-Anordnung eingekoppelt wird. Die Schichtdicke und der spezifische elektrische Widerstand der ersten Beschichtung werden so gewählt, dass mittels der erste Beschichtung Leistung in die Heizer-Reformer-Zelle eingekoppelt werden kann. Eine zweite Beschichtung kann so gewählt werden, dass diese vorrangig der Katalyse dient. Die zweite Beschichtung kann dazu die erste Beschichtung vollständig bedecken. Mit Vorteil kann dabei die Beschaffenheit der Oberfläche der zweiten Beschichtung auf eine katalytische Wirkung optimiert sein, so dass die Beschichtung eine große spezifische Oberfläche für die Umsetzung von Eduktgas anbietet. Da der elektrische Widerstand der Heizer-Reformer-Zelle im Ersatzschaltbild einer Reihenschaltung durch den elektrischen Widerstand der ersten Beschichtung begrenzt wird, kann die katalytisch wirksame zweite Beschichtung eine metallische Leitfähigkeit aufweisen, während die erste Beschichtung deutlich schlechter leitfähig ist. Zwischen der als Ohm'scher Widerstand wirksamen ersten Beschichtung und dem metallischen Träger der Heizer-Reformer-Zelle kann eine haftvermittelnde Schicht angeordnet sein. Auch zwischen der als Ohm'scher Widerstand wirksamen ersten Beschichtung und der katalytisch wirksamen zweiten Beschichtung kann eine haftvermittelnde Zwischenschicht vorgesehen sein.

Für reine Heizer-Anwendungen kann auf teure, katalytisch wirksame Bestandteile verzichtet werden. Als Beschichtung für Hochtemperaturanwendungen bis ca. 900°C eignen sich beispielsweise temperaturstabile Halbleitermaterialien wie Ceroxid, Zirkonoxid, Siliziumkarbid, dotierte oder nicht-stöchiometrische Metalloxide wie Aluminiumoxid (AlₓO_{y}), Chromoxid (CrₓO_{y}), Spinelle (z. B. Magnesiumaluminat (MgAl₂O₄), Zinkferrit (ZnFe₂O₄) oder Perowskite (z. B. LaMnO₃, La₁-ₓSrₓMnO₃). Besonders bevorzugt sind Aluminiumoxid, Spinelle und Ceroxid, da es eine gute Haftung auf Eisen-Chrom-Aluminium-Legierungen aufweisen. Beschichtungen aus Aluminiumoxid, Magnesiumaluminat oder Zinkferrit lassen sich besonders kostengünstig fertigen und benötigen keine seltenen Erden. Unterhalb diese Temperaturbereiches kommen zum Beispiel auch Silizium, Germanium, Zinnoxid und Zinkoxid in Frage. Der elektrische Widerstand der Beschichtung wird durch Beimischung leitfähiger Substanzen, Dotierung und/oder die Wahl der Schichtdicke eingestellt.

Die katalytische Effizienz der Heizer-Reformer-Anordnung kann weiter dadurch gesteigert werden, dass die katalytisch wirksame Beschichtung zumindest einiger Heizer-Reformer-Zellen einen oder mehrere, die Koksbildung verhindernde und/oder die Redox-Eigenschaften verbessernde Promotoren enthält. Mit derartigen Promotoren kann die Gefahr einer Koksbildung innerhalb der gasführenden Strukturen der Heizer-Reformer-Anordnung reduziert werden. Solche Promotoren können insbesondere Materialien aus der Gruppe Lanthan (La), Strontium (Sr), Kalium (K), Ceroxid (CeO₂) oder Zirkonoxid (ZrO₂) aufweisen, oder aus einem dieser Materialien bestehen. Die Gefahr einer Koksbildung wird beispielsweise gut mit Lanthan (La), Strontium (Sr), Kalium (K) reduziert. Eine Verbesserung der Redox-Eigenschaft lässt sich gut mit Ceroxid (CeO₂) oder Zirkonoxid (ZrO₂) erzielen.

In einer Ausgestaltung ist daran gedacht, dass die Beschichtung zumindest einiger Heizer-Reformer-Zellen texturiert ist. Damit kann die wirksame Oberfläche der Heizer-Reformer-Zellen vergrößert werden, ohne die Ausdehnung der Heizer-Reformer-Zellen zu erhöhen.

In einer bevorzugten Ausgestaltung ist vorgesehen, dass die Beschichtung zumindest einiger Heizer-Reformer-Zellen eine spezifische Oberfläche von 50 m²/g - 300 m²/g aufweist und/oder die Beschichtung zumindest einiger Heizer-Reformer-Zellen einen arithmetischen Mittenrauwert von 50 nm bis 10 µm aufweisen.

Eine großflächige Kontaktierung der Heizer-Reformer-Zellen mit Eduktgas und Produktgas bei gleichzeitig stabiler Beabstandung der Heizer-Reformer-Zellen kann dadurch unterstützt werden, dass die Abstandshalteelemente als ein das Eduktgas (und ggf. das Produktgas) durchlassendes Drahtgeflecht, z.B. ein gewobenes Metallnetz, oder als ein das Eduktgas (und ggf. das Produktgas) durchlassender Metallschaum, oder als eine das Eduktgas (und ggf. das Produktgas) durchlassende Gyroidstruktur ausgeführt sind. Die Abstandshalteelemente können aus Nickel, einem Nickelstahl, Nickel-Chrom-Stahl oder einem Eisen-Chrom-Aluminium-Stahl wie beispielsweise 1.4767 hergestellt sein, oder diese Materialien aufweisen. Die Kontaktfläche zwischen den Heizer-Reformer-Zellen und den Abstandshalteelemente kann über die Porengröße bzw. die Dichte des Drahtgewebes in einem weiten Bereich variiert werden und zum Beispiel lediglich 5% der Fläche der Heizer-Reformer-Zellen, aber auch 50% der der Fläche der Heizer-Reformer-Zellen betragen.

Die Reformereffizienz kann dadurch erhöht werden, dass zumindest einige der Abstandshalteelemente katalytisch wirksame Oberflächen aufweisen, insbesondere mit den Eigenschaften der katalytisch wirksamen Beschichtung der Heizer-Reformer-Zellen wie zuvor beschrieben.

In einer bevorzugten Ausgestaltung ist daran gedacht, dass die Stackanordnung innerhalb des Gehäuses zumindest auf zwei quer zur Stapelrichtung gegenüberliegenden Seiten von Wärmedämmelementen eingefasst ist. Solche erfindungsgemäßen Wärmedämmelemente weisen ein thermisch isolierendes Dämmmaterial auf. Diese Dämmeinrichtung ist vorzugsweise derart in dem Gehäuse angeordnet, dass die Stackanordnung und die Wärmedämmelemente zerstörungsfrei und wiedereinsetzbar aus dem Gehäuse entnehmbar sind. Dies ermöglicht einen kostenschonenden Austausch bzw. ermöglicht eine Reparatur einzelner Elemente der Heizer-Reformer-Anordnung bei Wartungs- oder Reparaturarbeiten. Beispielsweise können einzelne Heizer-Reformer-Zellen oder Abstandshalteelemente einfach und ohne hohen Montage- bzw. Kostenaufwand ausgetauscht werden.

Vorzugsweise kann vorgesehen sein, dass zumindest einige Wärmedämmelemente als Dämmplatten ausgeführt sind, mit denen die Stackanordnung eingefasst ist. Denkbar ist, dass seitlich bzw. oberhalb oder unterhalb der Stackanordnung ein Verbund bestehend aus zwei oder mehr als zwei Schichten von Dämmplatten verwendet wird und/oder Dämmplatten, die einen Kern aufweisen, der von einer Schale ummantelt ist. Solche sandwichartigen Anordnungen von aneinander angrenzend angeordneten Dämmplatten können vorteilhafte oder gewünschte mechanischen Eigenschaften oder thermischen Dämmeigenschaften bewirken. Beispielsweise ist denkbar innenliegend, also als Kern bzw. der Stackanordnung zugewandt zum Beispiel eine Al₂O₃-Keramik vorzusehen. Diese kann außen bzw. auf der der Stackanordnung abgewandten Seite z.B. von Mica/Glimmer-Matten umgeben abgegrenzt sein. Diese sind zu einem gewissen Grad kompressibel. Die beispielsweise eine Al₂O₃ Keramik aufweisenden inneren Platten dienen neben der thermischen Isolierung auch der elektrischen Isolierung der Stackanordnung

Die Wärmedämmelemente sind vorzugsweise temperaturstabil und können derart angeordnet sein, dass sie die Stackanordnung so abdichten, dass das Eduktgas im Wesentlichen nur durch die Stackanordnung strömen kann und ein Entweichen zur Seite hin ins Gehäuse behindert wird. Eine Gasdichtheit der Heizer-Reformer-Anordnung kann vorzugsweise mittels des die Stackanordnung einfassenden Gehäuses hergestellt sein. Dieses Gehäuse kann ein metallisches Gehäuse sein. Die Gaszuführung bzw. -abführung kann über Front- bzw. Rückseite des Gehäuses erfolgen. Die Stackanordnung kann z.B. in einen als Rohrabschnitt oder Gusskörper ausgebildeten Gehäuse eingebettet sein. An das Gehäuse kann an der Front bzw. Rückseite jeweils eine Manifoldstruktur angeordnet sein, derart dass das Gas die einzelnen Ebenen der Stackanordnung durchströmen kann. Die anderen beiden Seitenflächen und/oder Grund- sowie Deckflächen können mit Al₂O₃-Platten umgeben sein, um den Stack thermisch und elektrisch zu isolieren. Diese umgebenden Platten können dazu eingerichtet und ausgeführt sein, das Gas durch die Stackanordnung zu führen. Kleinere Öffnungen zwischen den Platten können durch andere geeignete Materialien abgedichtet werden.

In einer Ausgestaltung ist daran gedacht, dass das Dämmmaterial eine AlOₓ-Keramik, Glimmer und/oder Beton aufweisen. Beispielsweise können steife AlOₓ-Platten und kompressible Glimmer-Matten vorgesehen sein. Diese können in einem Schichtverbund seitlich, oberhalb und/oder unterhalb der Stackanordnung angeordnet sein.

In einer bevorzugten Ausgestaltung kann vorgesehen sein, dass die Stackanordnung innerhalb des Gehäuses in Stapelrichtung oben und/oder unten von Wärmedämmelementen eingefasst ist. Vorzugsweise kann die Einfassung lückenlos gasdicht mit seitlicher Einfassung ausgeführt sein. Für die Erhöhung der mechanischen Stabilität der Stackanordnung ist in einer möglichen Ausgestaltung daran gedacht, dass die Anordnung mindestens eine ein oder mehrere Spannelemente aufweisende Spannvorrichtung umfasst, mittels der eine axial entlang der Stapelrichtung auf die Stackanordnung wirkende Spannkraft aufbringbar ist.

Die Spannelemente können sich beispielsweise einerseits an dem Gehäuse abstützen und andererseits auf die obere Dämmplatte und damit mittelbar auf die Stackanordnung verspannend wirken. Denkbar ist aber auch, die Spannelemente derart anzuordnen, dass die Spannkraft ausschließlich auf die Stackanordnung wirkt, ohne Abstützung am Gehäuse. Dies könnte beispielsweise mit die Stackanordnung übergreifende Zugstangen bewirkt werden, die in Stapelrichtung oben und unten gegen die Stackanordnung bzw. gegen oben und/oder unten angeordnete Wärmedämmelemente abgestützt ist.

In einer ersten Ausgestaltung ist hinsichtlich der Verspannung der Stackanordnung daran gedacht, dass die Spannelemente mindestens eine Spannfeder und/oder ein kompressibles Glasfasermaterial und/oder die Stackanordnung axial entlang der Stapelrichtung übergreifende Zugstangen umfassen. Mit derartigen Zugstangen ist die Stackanordnung axial entlang der Stapelrichtung einspannbar.

Das erste und das letzte Element der Heizer-Reformer-Anordnung können aus einem Blech mit einer gegenüber den übrigen Heizer-Reformer-Zellen erhöhten Blechstärke ausgeführt sein. Die Blechstärke der übrigen Heizer-Reformer-Zellen kann beispielsweise 0,7 mm betragen, während die erste und die letzte Heizer-Reformer-Zellen aus einem Blech mit einer Stärke von beispielsweise größer oder gleich 2 mm, insbesondere mit einer Stärke von 5 mm ausgeführt sind. Alternativ kann die Heizer-Reformer-Anordnung auch eine erste und eine zweite Endplatte aufweisen, welche die Stackanordnung in Stapelrichtung oben und unten einfassen, also flächig mit der ersten und der letzten Heizer-Reformer-Zelle der Stackanordnung abschließen. Eine solche Ausführung kann vorteilhaft sein, um eine Stabilität der Stapelanordnung zu gewährleisten und die bei der Verspannung der Anordnung auftretenden Kräfte homogen in die Stackanordnung einzuleiten und auf diese Weise zu vermeiden, dass einzelne Heizer-Reformer-Zellen oder Abstandshalteelement plastisch verformt werden.

Zur Einleitung eines elektrischen Stroms in die Stackanordnung, mit dem die Stackanordnung elektrisch auf eine Betriebstemperatur beispielsweise von mehr als 600 °C beheizbar ist, kann vorgesehen sein, dass zumindest einige der Spannelemente elektrisch leitend verbunden sind mit den für die Energieversorgung vorgesehenen elektrischen Anschlüssen der Stackanordnung. Dadurch kann mittels der Spannelemente ein erster elektrischer Anschluss der Stackanordnung mit einer in Stapelrichtung ersten Heizer-Reformer-Zelle und ein zweiter elektrischer Anschluss der Stackanordnung mit einer in Stapelrichtung letzten Heizer-Reformer-Zelle kontaktiert sein. Dies ermöglicht die Beaufschlagung der Stackanordnung zwischen dem ersten und letzten Heizer-Reformer-Zelle mit einem elektrischen Strom, der zur Erwärmung der Heizer-Reformer-Zellen auf eine Betriebstemperatur dient. Alternativ kann die Kontaktierung auch über die erste und zweite Endplatte erfolgen.

Um die Austauschbarkeit einzelner Elemente der Heizer-Reformer-Anordnung zu erweitern ist in einer weiteren Ausgestaltung daran gedacht, dass die Heizer-Reformer-Anordnung in einer Betriebsanordnung derart zusammengesetzt ist, dass die Heizer-Reformer-Zellen und die Wärmedämmelemente zerstörungsfrei aus dem Gehäuse entnehmbar und jeweils zerstörungsfrei voneinander trennbar zueinander angeordnet sind. Die Heizer-Reformer-Zellen, Abstandshalteelemente und ggf. Endplatten können nach dem Lösen der Spannelemente einzeln entnommen und einer Wiederaufarbeitung zugeführt werden. Je nach Zustand der einzelnen Bauelemente können diese gereinigt und wiederverwandt oder ersetzt werden. Ist eine Reinigung nicht möglich, ermöglicht die erfindungsgemäße Heizer-Reformer-Anordnung, dass die einzelnen Bauelemente auf einfache Weise getrennt, sortiert und recycelt werden können.

Die Erfindung wird in den nachfolgenden Figuren näher erläutert. Es zeigen
- Fig. 1: eine schematisierte Darstellung einer Heizer-Reformer-Anordnung in einer Frontalansicht,
- Fig. 2: eine schematisierte Darstellung einer Heizer-Reformer-Anordnung in einer isometrischen Ansicht mit Manifoldstrukturen für die Zuführung von Eduktgas und die Abführung von Produktgas,
- Fig. 3: eine schematisierte Darstellung der Heizer-Reformer-Anordnung aus Fig. 1 mit einer elektrischen Kontaktierung der Heizer-Reformer-Zellen und einer Spannvorrichtung einer ersten Variante,
- Fig. 4: eine schematisierte Darstellung der Heizer-Reformer-Anordnung aus Fig. 1 mit einer elektrischen Kontaktierung der Heizer-Reformer-Zellen und einer Spannvorrichtung einer zweiten Variante, und
- Fig. 5: eine schematisierte Darstellung zweier übereinander gestapelter Reformer-Zelleinheiten, jeweils bestehend aus einer Reformerzelle und einem Abstandshalteelement.

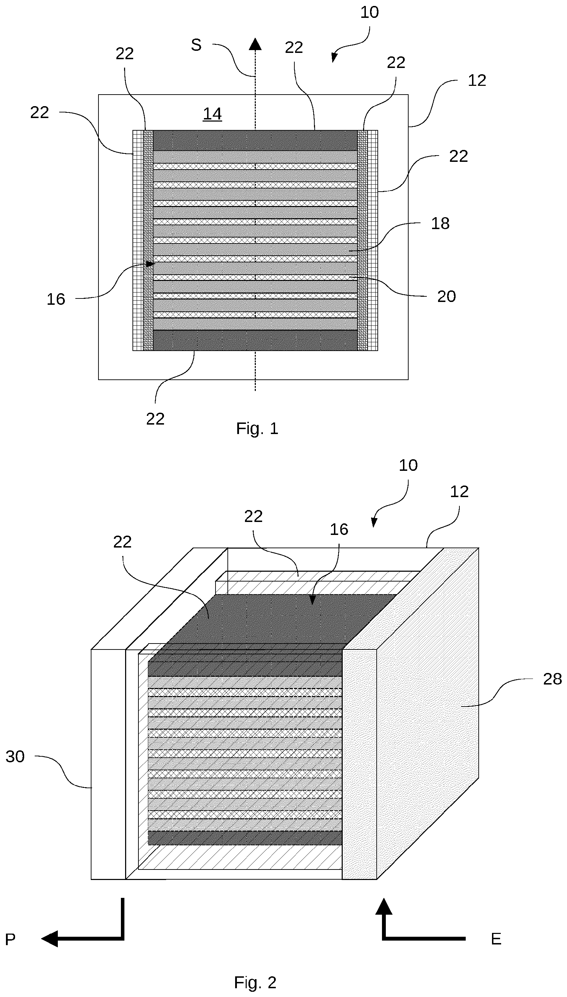

Figur 1 zeigt eine starke schematisierte Ansicht einer erfindungsgemäßen Heizer-Reformer-Anordnung 10. Die Heizer-Reformer-Anordnung 10 weist ein Gehäuse 12 auf, in dessen Innenraum 14 eine Stackanordnung 16 angeordnet ist. Die Stackanordnung 16 umfasst mehrere Heizer-Reformer-Zellen 18, die jeweils mittels Abstandshalteelementen 20 voneinander beabstandet in der Stackanordnung 16 platziert sind. Die Heizer-Reformer-Zellen 18 sind beispielsweise quadratisch und haben Kantenlängen von 100 mm x 100 mm.

Die Heizer-Reformer-Zellen 18 und die dazwischen angeordneten Abstandshalteelementen 20 sind in einer Stapelrichtung S von unten nach oben übereinandergestapelt angeordnet. In Stapelrichtung unten und in Stapelrichtung oben ist die Stackanordnung 16 jeweils mit einem als Dämmplatte ausgeführten Wärmedämmelement 22 bedeckt. Zu beiden Seiten der Stackanordnung 16, in Bildebene links und rechts, ist die Stackanordnung 16 ebenfalls mit als Dämmplatten ausgeführten Wärmedämmelementen 22 bedeckt. Die Wärmedämmelemente 22 auf den beiden Seiten der Stackanordnung 16 sind in dieser Variante doppelschichtig ausgeführt. Das heißt, in dieser Variante bestehen die seitlichen angeordneten Wärmedämmelemente 22 aus zwei aneinander angrenzend angeordneten Dämmplatten einer Doppelschicht. Die innenliegende Dämmplatte kann beispielsweise aus einem von Mica/Glimmer-Matten hergestellt sein und die außenliegende Dämmplatte kann aus einer Al2O3-Keramik hergestellt sein. Die Doppelschicht verbessert zum einen die thermische Isolierung, da ein weiterer Wärmeübergang erfolgt, zum anderen verbessert sie die Abdichtung der Stackanordnung 16 gegenüber dem Gehäuse 12, so dass Gas, welches in einer Richtung senkrecht zur Darstellungsebene an die Stackanordnung 16 herangeführt wird im Wesentlichen durch die Stackanordnung 16 und nicht an ihr vorbeigeführt wird.

Figur 2 zeigt eine stark schematisierte Ansicht einer erfindungsgemäßen Heizer-Reformer-Anordnung 10. Ähnlich wie die Heizer-Reformer-Anordnung 10 aus Figur 1, ist eine Stackanordnung 16 in einem Innenraum 14 eines Gehäuses 12 angeordnet. Die Stackanordnung 16 enthält - wie in Fig. 1 - mehrere mit Abstandshalteelementen 20 beabstandete Heizer-Reformer-Zellen 18. In Stapelrichtung unten und oben ist die Stackanordnung 16 mit Wärmedämmplatten 22 bedeckt. In dieser Ansicht ist die Heizer-Reformer-Anordnung mit einer an die Stackanordnung 16 gekoppelten Eduktgas-Manifoldstruktur 28 gezeigt. Mittels der Eduktgas-Manifoldstruktur 28 wird Eduktgas E (Methan) in die von den Abstandshalteelementen 20 besetzten Zwischenräume zwischen den Heizer-Reformer-Zellen 18 geleitet. Die Abstandshalteelemente 20 sind gasdurchlässig ausgeführt, so dass ein in die Zwischenräume geleitetes Gas von der eingangsseitig an die Stackanordnung 16 angeschlossenen Eduktgas-Manifoldstruktur 28 bis an eine ausgangsseitig an die Stackanordnung 16 angeschlossene Produktgas-Manifoldstruktur 30 geführt werden kann. Die Abstandshalteelemente 20 sind beispielsweise als großporiger Metall-Schaum ausgeführt. Bei der Durchleitung von Eduktgas E durch die Zwischenräume zwischen den Heizer-Reformer-Zellen 18 werden mit einer katalytisch wirksamen Beschichtung (beispielsweise aus Nickel und Gadolinium-dotiertem Ceroxid) beschichtete Oberflächenbereiche der Heizer-Reformer-Zellen 18 überstrichen. Mittels einer dabei einsetzenden katalytischen Reaktion wird das Eduktgas E (Methan) in das gewünschte Produktgas P (Kohlenmonoxid und Wasserstoff) umgewandelt. Das mittels der katalytischen Reaktion gewonnene Produktgas P wird zwangsgeführt in eine ausgangsseitig an die Stackanordnung 16 angeschlossene Produktgas-Manifoldstruktur 30 geführt. Die Kontaktfläche zwischen den Heizer-Reformer-Zellen 18 und den Abstandshalteelemente 20 in diesem Ausführungsbeispiel beträgt aufgrund der großen Poren lediglich 5% der Fläche der Heizer-Reformer-Zellen 18.

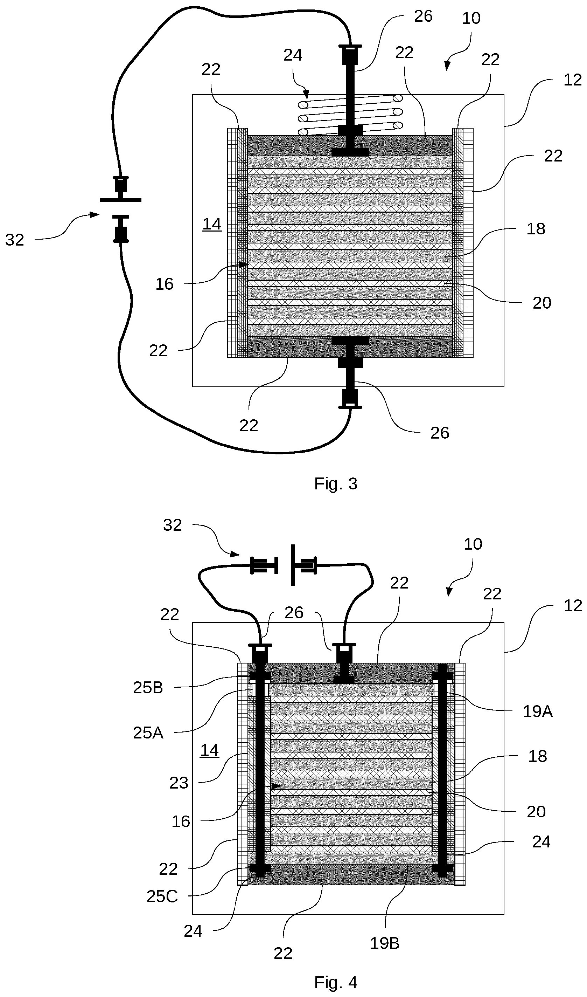

Die Figuren 3 und 4 zeigt die Heizer-Reformer-Anordnung 10 aus Figur 1 mit daran angeschlossenen elektrischen Anschlüssen 26. Die Heizer-Reformer-Anordnung 10 hat beispielsweise einen elektrischen Widerstand von 20 Ohm. Es sind zwei elektrische Anschlüsse 26 gezeigt, die jeweils mit einer ersten unteren und einer letzten oberen Heizer-Reformer-Zelle 18 elektrisch leitend kontaktiert sind. Die elektrischen Anschlüsse 26 sind mit einer elektrischen Energiequelle 32 elektrisch leitend verbunden. Die elektrische Energiequelle 32 ist beispielsweise eine 400V-AC-Spannungsquelle, mittels der die Stackanordnung 16 mit einer einen Stromfluss erzeugenden Spannung beaufschlagt werden kann. Durch die sich mit der Wechselspannung verändernde Polarisation lässt sich die Katalysatoraktivität gegenüber einer Gleichspannungsversorgung verbessern. Mit einem zwischen der ersten unteren und der letzten oberen kontaktierten Heizer-Reformer-Zelle 18 fließenden Strom kann die Stackanordnung auf eine Betriebstemperatur erwärmt werden. Ein Stromfluss über mehrere Heizer-Reformer-Zellen 18 hinweg sind die Heizer-Reformer-Zellen vorliegend in einer Reihenschaltung miteinander elektrisch kontaktiert. Die Kontaktierung benachbarter Heizer-Reformer-Zellen 18 wird hierbei mittels elektrisch leitend ausgeführter Abstandshalteelemente 20 erreicht.

In der in Figur 3 gezeigten Variante ist innerhalb des Gehäuses 12 ein als Schraubenfeder ausgeführtes Spannelement 24 angeordnet. Das Spannelement 24 ist einerseits gegen das Gehäuse 12 und andererseits gegen die in Stapelrichtung oberhalb der Stackanordnung 16 angeordnete Dämmplatte 22 abgestützt. Mittels einer von dem Spannelement 24 in der Ruhelage aufgebrachten Spannkraft werden die Heizer-Reformer-Zellen 18 und die Abstandshalteelemente 20 in der Stackanordnung 16 miteinander verspannt. Unten ist die Stackanordnung 16 gegen das Gehäuse abgestützt und die von dem Spannelement 24 auf die Stackanordnung 16 aufgeprägte Kraft wird über die Stackanordnung 16 und die im unteren Bereich der Stackanordnung 16 angeordnete Dämmplatte 22 in das Gehäuse 12 eingeleitet. Mit der Verspannung der Heizer-Reformer-Zellen 18 und der Abstandshalteelemente 20 in der Stackanordnung 20 wird die elektrische Kontaktierung zwischen den Abstandshalteelementen 20 und den Heizer-Reformer-Zellen 18 unterstützt.

In der in Figur 4 gezeigten Variante sind die Spannelemente 24 als Zugstangen ausgeführt. Die Stackanordnung 16 ist mit einer Ersten Endplatte 19A und einer Zweiten Endplatte 19B ausgeführt, die über den Rand der übrigen Heizer-Reformer-Zellen 18 und Abstandshalteelemente 20 hinausragen. Die Zugstangen 24 verspannen die Erste Endplatte 19A und die Zweite Endplatte 19B miteinander. Die Zugstangen 24 sind durch Öffnungen der Zweiten Endplatte 19B geführt und unterhalb der Zweiten Endplatte 19B gegenüber dieser mittels einer Verschraubung 25C verschraubt. Durch die Verspannung der beiden Endplatten wird auf diese Weise mit der Unterseite der Zweiten Endplatte 19B eine elektrisch leitende Verbindung mit der Stackanordnung 16 hergestellt. Die Zugstangen 24 werden durch Wärmedämmelemente 23 elektrisch und thermisch von der Stapelanordnung 16 isoliert und an dieser vorbeigeführt. Die Zugstangen 24 sind durch Öffnungen der Ersten Endplatte 19A geführt und oberhalb der Ersten Endplatte 19A gegenüber dieser mittels einer Verschraubung 25B verschraubt. Um einen elektrischen Kontakt zwischen den Zugstangen 24 und der Ersten Endplatte 19A und damit einen Kurzschluss der Stackanordnung 16 zu vermeiden, sind die Zugstangen 24 durch eine keramische Hülse geführt. Die Verschraubung 25B ist zudem mit einer elektrisch isolierenden Unterlegscheibe ausgeführt. Wenigstens eine der Zugstangen 24 sowie die Erste Endplatte 19A sind mit elektrischen Anschlüssen versehen. Wie eingangs beschrieben, sind die elektrischen Anschlüsse 26 mit einer elektrischen Energiequelle 32 verbunden. Ein mittels der Energiequelle 32 in die Heizer-Reformer-Anordnung 10 eingeleiteter Strom kann zwischen der ersten Heizer-Reformer-Zelle 18 und der letzten Heizer-Reformer-Zelle 18 fließen und somit zu einer elektrischen Erwärmung der Stackanordnung 16 dienen. Mittels der Zugstangen 24 kann ebenfalls eine Verspannung der in der Stackanordnung 16 angeordneten Heizer-Reformer-Zellen 18 und der dazwischen angeordneten Abstandshalteelemente 20 erreicht werden. Dafür sind die Zugstangen 24 einerseits oben und unten andererseits oben an einer unteren bzw. einer unteren Dämmplatte 22 abgestützt. Damit kann auf eine Verspannung der Stackanordnung 16 gegen das Gehäuse 12 verzichtet werden.

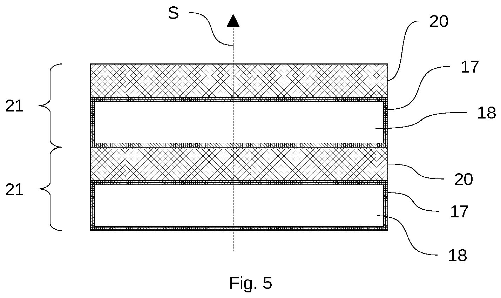

Fig. 5 zeigt exemplarisch den stark schematisierten Aufbau zweier Reformer-Zelleinheiten 21, jeweils bestehend aus einer Heizer-Reformer-Zelle 18 und einem die Heizer-Reformer-Zelle 18 kontaktierenden Abstandshalteelement 20. Die Heizer-Reformer-Zelle 18 ist mit einer Beschichtung 17 beschichtet. Im gezeigten Beispiel ist die Beschichtung 17 beidseitig auf dem Trägermaterial der Reformerzelle 18 aufgetragen. Alternativ (nicht dargestellt) kann die Beschichtung auch einseitig aufgetragen sein. Mittels mehrerer in Stapelrichtung S gestapelter Reformer-Zelleinheiten 21 kann eine wie in den Figuren 1 bis 4 gezeigte Stackanordnung ausgebildet sein. Die Abstandshalteelemente 20 sind vorzugsweise als Metallschaum oder als Drahtgeflecht ausgeführt, sodass ein zwischen die Reformerzellen 18 geführter Gasstrom die Abstandshalteelemente 20 durchströmt und dabei die Beschichtung 17 überstreicht. Zwischen einer in Stapelrichtung S ersten (unteren) Reformerzelle 18 und einer in Stapelrichtung S letzten (oberen) Reformerzelle 18 bzw. in diesem Fall dem oberen Abstandshalteelement 20 kann eine elektrisch leitende Verbindung bestehen. Diese elektrisch leitende Verbindung kann aufgrund punktueller oder flächiger Kontaktierung der Abstandshalter 20 und der Heizer-Reformer-Zellen 18, bzw. der Beschichtung 17 untereinander hergestellt sein.

### BEZUGSZEICHENLISTE

- 10: Heizer-Reformer-Anordnung
- 12: Gehäuse
- 14: Innenraum
- 16: Stackanordnung
- 17: Beschichtung
- 18: Heizer- Reformer-Zellen
- 19A: Erste Endplatte
- 19B: Zweite Endplatte
- 20: Abstandshalteelemente
- 21: Reformer-Zelleinheit
- 22: Wärmedämmelemente
- 23: Wärmedämmelemente
- 24: Spannelemente
- 25A: Hülse
- 25B: Verschraubung mit elektrisch isolierender Unterlegscheibe
- 25C: Verschraubung
- 26: Elektrische Anschlüsse
- 28: Eduktgas-Manifoldstruktur
- 30: Produktgas-Manifoldstruktur
- 32: Elektrische Energiequelle

- S: Stapelrichtung
- E: Eduktgas
- P: Produktgas

## Patentansprüche

1. Heizer-Reformer-Anordnung (10) zur Umwandlung eines kohlenwasserstoffreichen Eduktgases (E) in ein wasserstoffreiches Produktgas (P) und/oder zum elektrischen Beheizen eines Eduktgases, umfassend
wenigstens ein Gehäuse (12) mit einem Innenraum (14),
und wenigstens einer im Innenraum (14) des Gehäuses (12) angeordneten Stackanordnung (16),
wobei die Stackanordnung (16) mehrere in eine Stapelrichtung (S) gestapelte plattenartig ausgeführte, jeweils eine Beschichtung (17) aufweisende Heizer-Reformer-Zellen (18) umfasst,
wobei zwischen benachbart angeordneten Heizer-Reformer-Zellen (18) jeweils ein Abstandshalteelement (20) angeordnet ist, und wobei
die Stackanordnung (16) für den Durchgang eines Gases durch die Stackanordnung (16) ausgebildet und eingerichtet ist, derart dass ein an die Stackanordnung (16) geführtes Eduktgas (E) zwischen den Heizer-Reformer-Zellen (18) geführt ist und dabei die mit der Beschichtung (17) versehenen Oberflächenbereiche der Heizer-Reformer-Zellen (18) überstreicht,
**dadurch gekennzeichnet, dass**
zumindest einige Heizer-Reformer-Zellen (18) jeweils elektrisch leitend mit den an die Heizer-Reformer-Zellen (18) angrenzenden Abstandshalteelemente (20) kontaktiert sind, derart, dass ein Stromfluss zwischen einer in Stapelrichtung (S) ersten elektrisch leitend mit einem ersten Pol einer elektrischen Versorgungseinrichtung verbundenen Heizer-Reformer-Zelle (18) und einer in Stapelrichtung (S) letzten elektrisch leitend mit einem zweiten Pol einer elektrischen Versorgungseinrichtung verbundenen Heizer-Reformer-Zelle (18) ermöglicht ist.

2. Heizer-Reformer-Anordnung (10) nach Anspruch 1, **dadurch gekennzeichnet, dass** die Heizer-Reformer-Zellen (18) und die Abstandshalteelemente (20) lose und zerstörungsfrei trennbar in der Stackanordnung (16) aufeinandergestapelt sind.

3. Heizer-Reformer-Anordnung (10) nach Anspruch 2, **dadurch gekennzeichnet, dass** die Stackanordnung (16) zwischen dem ersten elektrisch leitend mit dem ersten Pol der elektrischen Versorgungseinrichtung verbundenen Heizer-Reformer-Zelle (18) und dem letzten elektrisch leitend mit dem zweiten Pol der elektrischen Versorgungseinrichtung verbundenen Heizer-Reformer-Zelle (18) einen elektrischen Gesamtwiderstand im Bereich 1 Ohm bis 100 Ohm, vorzugsweise im Bereich 5 Ohm bis 20 Ohm ausweist.

4. Heizer-Reformer-Anordnung (10) nach einem der vorangegangenen Ansprüche, **dadurch gekennzeichnet, dass** die Beschichtung (17) derart ausgebildet und eingerichtet ist, dass sie einen spezifischen elektrischen Widerstand im Bereich von $1 ⋅ {10}^{6} \frac{Ohm ⋅ {mm}^{2}}{m}$ bis 1 · ${10}^{8} \frac{Ohm ⋅ {mm}^{2}}{m}$ aufweist.

5. Heizer-Reformer-Anordnung (10) nach einem der vorangegangenen Ansprüche, **dadurch gekennzeichnet, dass** die Heizer-Reformer-Zellen (18) aus einem hitzebeständigen Chrom-Stahl ausgebildet sind.

6. Heizer-Reformer-Anordnung (10) nach einem der vorangegangenen Ansprüche, **dadurch gekennzeichnet, dass** die Beschichtung (17) eine katalytisch wirksame Beschichtung ist, mittels der ein kohlenwasserstoffreiches Eduktgas (E) in ein wasserstoffreiches Produktgas (P) umwandelbar ist.

7. Heizer-Reformer-Anordnung (10) nach einem der vorangegangenen Ansprüche, **dadurch gekennzeichnet, dass** die Beschichtung (17) zumindest einiger Heizer-Reformer-Zellen (18) aus einer Nickel-Schicht und/oder einem anderen Übergangsmetall wie zum Beispiel Cobalt (Co), Kupfer (Cu), Platin (Pt), Rhodium (Rh), Palladium (Pd), Ruthenium (Ru), Iridium (Ir), Eisen (Fe) oder einem Gemisch aus Übergangsmetallen ausgebildet ist.

8. Heizer-Reformer-Anordnung (10) nach einem der vorangegangenen Ansprüche, **dadurch gekennzeichnet, dass** die Beschichtung (17) zumindest einiger Heizer-Reformer-Zellen (18) einen oder mehrere, die Koksbildung verhindernde und/oder die Redox-Eigenschaften verbessernde Promotoren enthält.

9. Heizer-Reformer-Anordnung (10) nach einem der vorangegangenen Ansprüche, **dadurch gekennzeichnet, dass** die Beschichtung (17) zumindest einiger Heizer-Reformer-Zellen (18) texturiert ist.

10. Heizer-Reformer-Anordnung (10) nach einem der vorangegangenen Ansprüche, **dadurch gekennzeichnet, dass** die Beschichtung (17) zumindest einiger Heizer-Reformer-Zellen (18) eine Spezifische Oberfläche (BET-Oberfläche) von 50 - 300 m²/g aufweist und/oder die Beschichtung zumindest einiger Heizer-Reformer-Zellen (18) einen Ra-Wert (arithmetischer Mittenrauwert) von 50 nm - 10 µm aufweisen.

11. Heizer-Reformer-Anordnung (10) nach Anspruch 1, **dadurch gekennzeichnet, dass** die Abstandshalteelemente (20) als ein das Eduktgas (E) durchlassendes Drahtgeflecht oder als ein das Eduktgas (E) durchlassender Metallschaum oder als eine das Eduktgas durchlassende Gyroidstruktur ausgeführt sind.

12. Heizer-Reformer-Anordnung (10) nach einem der vorangegangenen Ansprüche, **dadurch gekennzeichnet, dass** zumindest einige der Abstandshalteelemente (20) eine Oberflächenbeschichtung aufweisen, insbesondere mit den Eigenschaften der Beschichtung (17) der Heizer-Reformer-Zellen (18) nach einem der Ansprüche 4 bis 10.

13. Heizer-Reformer-Anordnung (10) nach einem der vorangegangenen Ansprüche, **dadurch gekennzeichnet, dass** die Heizer-Reformer-Anordnung (10) mindestens eine ein oder mehrere Spannelemente (24) aufweisende Spannvorrichtung umfasst, mittels der eine axial entlang der Stapelrichtung (S) auf die Stackanordnung (16) wirkende Spannkraft aufbringbar ist.

14. Heizer-Reformer-Anordnung (10) nach einem der vorangegangenen Ansprüche, **dadurch gekennzeichnet, dass** die Spannelemente (24) mindestens eine Spannfeder und/oder ein kompressibles Glasfasermaterial und/oder die Stackanordnung (16) axial entlang der Stapelrichtung (S) übergreifende Zugstangen umfassen.

15. Heizer-Reformer-Anordnung (10) nach einem der vorangegangenen Ansprüche, **dadurch gekennzeichnet, dass** zumindest ein Spannelement (24) elektrisch leitend mit einer ersten und/oder letzten Heizer-Reformer-Zelle (18) der Stackanordnung (16) verbunden ist.
